# FASCICULE DE BREVET EUROPEEN

(11) **EP 1 958 902 B1**
(45) Date de publication et mention de la délivrance du brevet: **10.03.2010**
(21) Numéro de dépôt: 08150085.2
(22) Date de dépôt: 08.01.2008
(51) Int. Cl.: B65H 3/06, B65G 47/54

(54) **Alimenteur comportant un dispositif de transport perfectionné d'articles de courrier**
Zuführgerät, das mit einer verbesserten Transportvorrichtung für Postartikel ausgestattet ist
Feeder including an improved transport device for postage items

(30) Priorité: 25.01.2007 FR 0752881
(43) Date de publication de la demande: 20.08.2008
(73) Titulaire: NEOPOST TECHNOLOGIES, 92220 Bagneux (FR)
(72) Inventeur: Gregoire, Jean-Pierre, 77170 Brie Comte Robert (FR); Pillard, Romain, 77210 Avon (FR)
(74) Mandataire: David, Alain

(56) Documents cités:
- EP-A1- 0 856 484
- US-A- 3 590 970
- US-A- 3 964 588
- US-A- 4 981 203
- "BARREL ROLLS FOR DOCUMENT ALIGNMENT" IBM TECHNICAL DISCLOSURE BULLETIN, IBM CORP. NEW YORK, US, vol. 32, no. 6B, 1 novembre 1989 (1989-11-01), pages 291-292, XP000073814 ISSN: 0018-8689

## Description

### Domaine de la technique

La présente invention se rapporte exclusivement au domaine du traitement de courrier et elle concerne plus particulièrement un module d'alimentation en articles de courrier d'une machine de traitement de courrier comportant un dispositif de transport perfectionné d'articles de courrier

### Art antérieur

Les spécifications postales qui régissent l'impression de l'empreinte postale sont très précises et définissent notamment sa position par rapport au bord supérieur de l'enveloppe. Or, cette position est liée au taquage de l'enveloppe. L'enveloppe étant convoyée parallèlement à une paroi de mise en référence (dite aussi paroi de taquage), un défaut de taquage dans le magasin d'alimentation (ou alimenteur) entraîne le même défaut en aval dans le dispositif de sélection puis plus avant encore lors du passage sous le module d'impression. Le contrôle et la correction automatique de ce défaut de taquage dès l'alimenteur sont donc très importants de façon à éviter un retaquage systématique par l'opérateur lors de l'insertion d'une pile d'enveloppes dans cet alimenteur.

Aujourd'hui pour solutionner ce problème, il est connu d'incliner les rouleaux de convoyage d'un alimenteur tel celui illustré dans EP 0 856 484 pour, par un transport en diagonal, décaler les enveloppes vers la paroi de mise en référence tout en les convoyant en aval vers le dispositif de sélection. Toutefois, cette configuration en exerçant un effort de retaquage important sur l'enveloppe freine celle-ci et, dans le cas d'une enveloppe fine, peut même la détériorer. En outre, l'effort exercé dépend de la position de chaque rouleau de convoyage par rapport au dispositif de sélection.

La demanderesse a aussi proposé d'adjoindre aux rouleaux de convoyage disposés parallèlement à la paroi de mise en référence des rouleaux de retaquage perpendiculaires et fonctionnant en avance de phase par rapport à ces derniers. Une structure semblable est décrite dans l'article « Barrel Rolls for document alignment» du bulletin IBM. Toutefois, ici encore et même si elle est réduite par rapport à la configuration précédente, une tendance au freinage des enveloppes persiste malgré tout du fait de l'action de ces rouleaux de retaquage et est d'autant plus importante que la hauteur et/ou la masse de la pile d'enveloppes est élevée.

### Objet et définition de l'invention

La présente invention a donc pour objet de pallier les inconvénients précités avec un dispositif d'alimentation en articles de courrier comportant des organes d'entraînement spécifiques permettant un contrôle et une correction du taquage de ces articles de courrier. Un but de l'invention est aussi de proposer un dispositif dont les performances sont indépendantes de la masse et/ou de la hauteur de la pile d'enveloppes disposée sur l'alimenteur.

Ces buts sont atteints avec un alimenteur en articles de courrier de machine de traitement de courrier comportant une pluralité d'organes d'entraînement commandés par une cinématique appropriée et destinés à traverser un plateau de réception des articles de courrier dudit alimenteur, caractérisé en ce que lesdits organes d'entraînement sont chacun constitués par une roue cylindrique comportant une denture droite formée d'une pluralité de dents entre lesquelles est interposée une pluralité de petits galets indépendants d'axe perpendiculaire.

Ainsi, par cette structure particulière des organes d'entraînement assurant une double fonction de convoyage et de taquage, le coefficient de frottement dû aux rouleaux de retaquage est supprimé et le taquage peut être effectué sans préjudice pour le transport des articles de courrier.

Avantageusement, lesdits galets sont montés fous sur des axes de rotation disposés dans un plan perpendiculaire à l'axe de rotation de ladite roue cylindrique et fixés chacun entre des flancs se faisant face de deux dents adjacentes.

De préférence, lesdits axes de rotation des galets sont distribués selon les cotés d'un polygone régulier et positionnés à une distance déterminée dudit axe de rotation de la roue et lesdits galets comportent chacun avantageusement une surface périphérique externe qui déborde d'environ 0,5 à 1 mm d'un sommet des dents.

Ladite roue cylindrique peut être constituée d'un matériau standard à faible coût de type polyuréthane et ledit galet peut être constitué de silicone.

Avantageusement, le dispositif selon l'invention comporte au moins six galets espacés régulièrement de 60°.

### Brève description des dessins

L'invention sera mieux comprise au vu de la description détaillée qui va suivre accompagnée par des exemples illustratifs et non limitatifs en regard des figures suivantes sur lesquelles :
- la figure 1 montre en perspective un dispositif d'alimentation pour machine de traitement de courrier intégrant un dispositif de transport perfectionné selon l'invention,
- la figure 2 est une vue en perspective de l'un des organes d'entraînement du dispositif de transport de la figure 1, et
- les figures 2A et 2B sont deux vues en coupe selon deux plans perpendiculaires de l'organe d'entraînement de la figure 2.

### Description détaillée de modes de réalisation

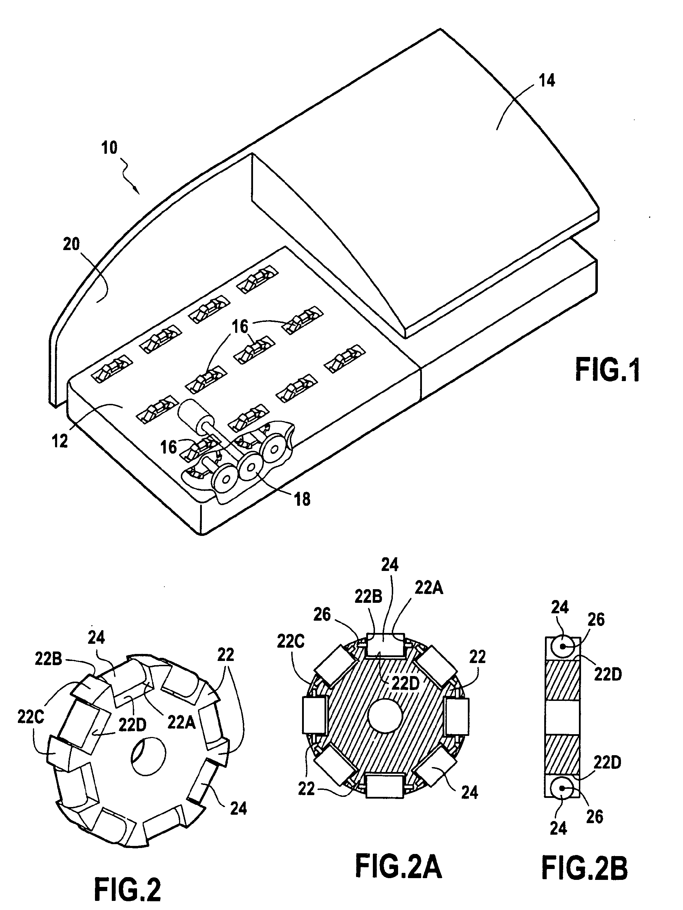

Un dispositif d'alimentation (ou alimenteur) en articles de courrier pour machine de traitement de courrier intégrant un dispositif de transport perfectionné selon l'invention est illustré à la figure 1. Cet alimenteur 10 comporte classiquement un plateau de réception 12 sur lequel sont placés en une pile compacte, homogène ou non (selon que ces articles sont de même dimension ou non), les articles de courrier à imprimer. Ces articles de courrier sont convoyés vers un dispositif de sélection 14 par un dispositif de transport formé classiquement d'une pluralité d'organes d'entraînement tels que les rouleaux de convoyage 16 traversant le plateau de réception des articles de courrier et commandés par une cinématique appropriée 18.

Selon l'invention, ces rouleaux 16 du dispositif de transport sont disposés en ligne selon plusieurs rangées parallèlement à la paroi de mise en référence 20 de l'alimenteur et, comme l'illustrent plus particulièrement les figures 2, 2A et 2B, chacun de ces rouleaux est constitué par une roue cylindrique comportant une denture droite formée d'une pluralité de dents 22 entre lesquelles est interposée une pluralité de petits galets d'axe perpendiculaire 24. Plus précisément, ces galets sont montés fous sur des axes de rotation 26 disposés dans un plan perpendiculaire à l'axe de rotation de la roue et fixés chacun entre les flancs se faisant face 22A, 22B de deux dents adjacentes. Les axes de rotation des galets sont distribués selon les cotés d'un polygone régulier et positionnés à une distance déterminée de l'axe de rotation de la roue de telle sorte que la surface périphérique externe du galet déborde d'environ 0,5 à 1 mm du sommet des dents 22C et bien entendu ne vienne pas en contact avec le fond de ces dents 22D lors de la rotation du galet. Dans l'exemple illustré, chaque rouleau comporte huit dents et donc huit galets intercalés entre ces dents deux à deux. Bien entendu, ce nombre n'est aucunement limitatif et dépend essentiellement du diamètre de la roue cylindrique. Ainsi, une roue avec six galets espacés régulièrement de 60° est ainsi tout à fait possible comme une roue avec un nombre de galets supérieur. On notera que dans cette dernière configuration, plus le nombre de galets est élevé plus la courbe passant par les surfaces périphériques externes des galets se rapprochera d'une forme circulaire parfaite.

Ces galets sont réalisés dans un matériau qui est choisi par rapport aux spécifications techniques (abrasion, frottement, élasticité, dureté) attendues de l'entraînement, c'est-à-dire avec un coefficient de frottement suffisamment important pour permettre un entraînement des articles de courrier vers le dispositif de sélection. Un tel matériau est par exemple de la silicone, du caoutchouc naturel, du polyuréthane ou encore de l'éthylènepropylènedienemonomère. Par contre, la roue n'intervenant peu dans le processus de convoyage et de taquage, son matériau sera choisi pour son faible coût, par exemple un matériau à base de polyoxyméthylène.

## Revendications

1. Alimenteur en articles de courrier de machine de traitement de courrier comportant un plateau de réception (12) destiné à recevoir une pile d'articles de courrier, ledit plateau étant traversé par une pluralité d'organes d'entraînement (16) commandés par une cinématique appropriée (18),
**caractérisé en ce que** lesdits organes d'entraînement sont chacun constitués par une roue cylindrique comportant une denture droite formée d'une pluralité de dents (22) entre lesquelles est interposée une pluralité de petits galets indépendants d'axe perpendiculaire (24).

2. Alimenteur en articles de courrier selon la revendication 1, **caractérisé en ce que** lesdits galets sont montés fous sur des axes de rotation (26) disposés dans un plan perpendiculaire à l'axe de rotation de ladite roue cylindrique et fixés chacun entre des flancs se faisant face (22A, 22B) de deux dents adjacentes.

3. Alimenteur en articles de courrier selon la revendication 2, **caractérisé en ce que** lesdits axes de rotation des galets sont distribués selon les cotés d'un polygone régulier et positionnés à une distance déterminée dudit axe de rotation de la roue.

4. Alimenteur en articles de courrier selon la revendication 3, **caractérisé en ce que** lesdits galets comportent chacun une surface périphérique externe qui déborde d'environ 0,5 à 1 mm d'un sommet des dents (22C).

5. Alimenteur en articles de courrier selon la revendication 1, **caractérisé en ce que** ladite roue cylindrique est constituée d'un matériau standard à faible coût de type polyoxyméthylène.

6. Alimenteur en articles de courrier selon la revendication 1, **caractérisé en ce que** ledit galet est constitué de l'un des matériaux suivants : silicone, polyuréthane, caoutchouc naturel, éthylènepropylènedienemonomère.

7. Alimenteur en articles de courrier selon la revendication 1, **caractérisé en ce qu'**il comporte au moins six galets espacés régulièrement de 60°.

## Claims

1. A mail item feeder for feeding mail items into a mail handling machine, said mail item feeder comprising a mail item receiver bed (12) designed to receive a mail item stack, said bed being crossed by a plurality of drive members controlled by a suitable drive mechanism, wherein each of said drive members is constituted by a cylindrical wheel provided with a set of straight teeth formed by a plurality of teeth (22) between which there are interposed a plurality of independent small rollers (24) having axes perpendicular to the axis of the wheel.

2. A mail item feeder according to claim 1, wherein said small rollers are mounted to be free to rotate about axes of rotation (26) disposed in a plane that is perpendicular to the axis of rotation of said cylindrical wheel, each axis extending between the facing sides (22A, 22B) of two adjacent teeth.

3. A mail item feeder according to claim 2, wherein said axes of rotation of the small rollers are distributed around the sides of a regular polygon and are positioned at a determined distance from said axis of rotation of the wheel.

4. A mail item feeder according to claim 3, wherein each of said small rollers has an outer peripheral surface that projects by approximately in the range 0.5 mm to 1 mm relative to tops of the teeth (22C).

5. A mail item feeder according to claim 1, wherein said cylindrical wheel is made of a standard low-cost material of the polyoxymethylene type.

6. A mail item feeder according to claim 1, wherein said small roller is made of one of the following materials: silicone, polyurethane, natural rubber, ethylene propylene diene monomer.

7. A mail item feeder according to claim 1, having at least six small rollers spaced apart uniformly at 60° intervals.

## Patentansprüche

1. Zuführvorrichtung für Postsendungen einer Postbearbeitungsmaschine, umfassend eine Aufnahmeplatte (12), welche dazu bestimmt ist, einen Stapel von Postsendungen aufzunehmen, wobei die Platte von einer Vielzahl von Mitnahmeorganen (16) durchgriffen ist, die über eine geeignete Kinematik (18) angetrieben werden, **dadurch gekennzeichnet, daß** die Mitnahmeorgane jeweils von einem zylindrischen Rad mit einer Geradverzahnung gebildet sind, die aus einer Vielzahl von Zähnen (22) besteht, zwischen denen mehrere unabhängige kleine Rollen mit senkrechter Achse (24) angeordnet sind.

2. Zuführvorrichtung für Postsendungen nach Anspruch 1, **dadurch gekennzeichnet, daß** die Rollen beweglich um Drehachsen (26) angebracht sind, die in einer zur Drehachse des zylindrischen Rades senkrechten Ebene angeordnet und jeweils zwischen sich gegenüberliegenden Flanken (22A, 22B) von zwei benachbarten Zähnen befestigt sind.

3. Zuführvorrichtung für Postsendungen nach Anspruch 2, **dadurch gekennzeichnet, daß** die Drehachsen der Rollen entlang den Seiten eines regelmäßigen Vielecks verteilt und in einem bestimmten Abstand von der Drehachse des Rades positioniert sind.

4. Zuführvorrichtung für Postsendungen nach Anspruch 3, **dadurch gekennzeichnet, daß** die Rollen jeweils eine äußere Umfangsfläche aufweisen, die um etwa 0,5 bis 1 mm über einen Kopf der Zähne (22C) hinausragt.

5. Zuführvorrichtung für Postsendungen nach Anspruch 1, **dadurch gekennzeichnet, daß** das zylindrische Rad aus einem kostengünstigen Standardwerkstoff vom Typ Polyoxymethylen besteht.

6. Zuführvorrichtung für Postsendungen nach Anspruch 1, **dadurch gekennzeichnet, daß** die Rolle aus einem der folgenden Werkstoffe besteht, nämlich Silikon, Polyurethan, Naturkautschuk, Ethylenpropylendienmonomer.

7. Zuführvorrichtung für Postsendungen nach Anspruch 1, **dadurch gekennzeichnet, daß** sie wenigstens sechs Rollen umfaßt, die gleichmäßig um 60° voneinander beabstandet sind.
